# EUROPEAN PATENT APPLICATION

(11) **EP 4 024 879 A1**
(43) Date of publication of application: **06.07.2022**
(21) Application number: 19944625.3
(22) Date of filing: 04.12.2019
(51) Int. Cl.: H04N 21/435, H04N 21/439, H04N 21/44

(54) **VIDEO PROCESSING METHOD AND DEVICE, TERMINAL AND COMPUTER READABLE STORAGE MEDIUM**

(30) Priority: 06.09.2019 CN 201910844618
(71) Applicant: GUANGDONG OPPO MOBILE TELECOMMUNICATIONS CORP., LTD., Dongguan, Guangdong 523860 (CN)
(72) Inventor: WU, Henggang, Dongguan, Guangdong 523860 (CN)
(74) Representative: Ipside
(86) International application number: PCT/CN2019/122930
(87) International publication number: WO 2021/042605

(57) **Abstract**

The present application discloses a video processing method and device, a terminal and a storage medium. The method comprises: identifying a set of video segments in each initial video, the video data of each video segment is marked with a tag to classify the video segment by the tag; extracting a plurality of video segments from a set of video templates of one or more initial videos according to a tag type of the video template, wherein, the tag of the video segment matches the tag type of the video template, the plurality of video segments come from the same initial video or different initial videos; according to the video template, editing the plurality of video segments extracted to output a recommended video. The present application associates video segments with tags, when splicing and outputting the recommended video, the video segments associated with the tag in the tag type are selected for fusion according to the preset tag type of the video template, so as to enable the subject matter of the recommended video to conform to the subject matter of the video template, and the subject matter is more specific and clearer.

## Description

### TECHNICAL FIELD

The present disclosure relates to the field of video processing, and in particular to a video processing method, a video processing apparatus, a video processing terminal, and a computer-readable storage medium.

### BACKGROUND

In the related art, some software may scan images in a user's phone, stitches the images together to form some interesting videos based on a timeline, and displays the videos to the user. However, the images, which are selected in a chronological order and stitched together to create the videos, may not be highly correlated, resulting in a theme of the videos being cluttered.

### SUMMARY OF THE DISCLOSURE

The present disclosure provides a video processing method, a terminal, and a computer-readable storage medium.

In a first aspect, the video processing method includes: identifying a set of video clips in each of the plurality of initial videos, wherein video data of each of the set of video clips is attached to a tag, and the set of video clips are capable of being classified based on the tag; extracting a plurality of video clips from a set of video templates of one or more of the initial videos based on a tag type of a video template, wherein the tag of each of the extracted plurality of video clips matches the tag type of the video template, and the plurality of video clips are extracted from a same initial video or different initial videos; and editing the extracted plurality of video clips by using the video template to output a recommended video.

In a second aspect, a video processing module includes: a video tagging module, configured to identify a set of video clips in each of the plurality of initial videos, wherein a video data of each of the set of video clips has a tag, and the set of video clips are capable of being classified based on the tag; a video extracting module, configured to extract a plurality of video clips from a set of video templates of one or more of the plurality of initial videos based on tag types of the video templates, wherein tags of the extracted plurality of video clips match the tag types of the video templates where the plurality of video clips are extracted, and the plurality of video clips are extracted from a same initial video or different initial videos; and a video recommendation module, configured to edit the extracted plurality of video clips based on the video templates to output a recommended video.

In a third aspect, a terminal includes a processor and a memory. The memory stores a plurality of initial videos, a tag type preset for a video template and a tag library for configuring a tag for a video clip, and the processor is configured to perform the video processing method as described in the above.

In a fourth aspect, a computer-readable storage medium includes computer-readable instructions. The computer-readable instructions, when being executed by a processor, cause a processor to perform the video processing method described in the embodiments of the present disclosure.

According to the video processing method, the video processing apparatus, the video processing terminal, and the computer-readable storage medium provided in the present disclosure, a video clip is associated to a tag. While a plurality of video clips are stitched to obtain a final video, video clips that are associated to tags in a tag type are selected, based on a preset tag type of a video template, for stitching. In this way, a theme of the obtained recommended video conforms to a theme of the video template, and the theme is clearer and more explicit.

Additional aspects and advantages of the embodiments of the present disclosure will be given in part in the following description, and will become apparent in part from the following description, or will be understood from the practice of the embodiments of the present disclosure.

### BRIEF DESCRIPTION OF THE DRAWINGS

The above and/or additional aspects and advantages of the present disclosure will become apparent and easily understood from the description of the embodiments by referring to the following accompanying drawings.
FIG. 1 is a flow chart of a video processing method according to an embodiment of the present disclosure.
FIG. 2 is a structural schematic view of a terminal according to an embodiment of the present disclosure.
FIGS. 3 to 5 are flow charts showing principles for performing the video processing method according to an embodiment of the present disclosure.
FIG. 6 is a flow chart of a video processing method according to an embodiment of the present disclosure.
FIG. 7 is a flow chart showing a principle for performing the video processing method according to an embodiment of the present disclosure.
FIG. 8 is a flow chart of a video processing method according to an embodiment of the present disclosure.
FIG. 9 is a schematic view showing interaction between the computer-readable storage medium and a processor according to an embodiment of the present disclosure.

### DETAILED DESCRIPTION

The embodiments of the present application are described in detail below and examples of the embodiments are shown in the accompanying drawings. Same or similar reference numerals indicate same or similar components or components having a same or similar function. The embodiments described below by reference to the accompanying drawings are exemplary and are intended to explain the embodiments of the present disclosure only, and shall not be interpreted as limiting the scope of the embodiments of the present disclosure.

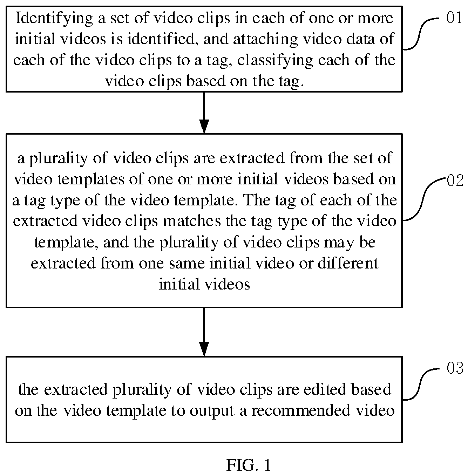

As shown in FIG. 1, the video processing method of the present disclosure includes an operation 01, an operation 02 and an operation 03. In the operation 01, a set of video clips in each initial video is identified. Video data of each of the video clips is attached to a tag, such that each of the video clips is classified based on the tag. In the operation 02, a plurality of video clips are extracted from a video template set of one or more initial videos based on a tag type of the video template. Tags of the video clips match the tag type of the video template, and the plurality of video clips may be extracted from one same initial video or different initial videos. In the operation 03, the extracted plurality of video clips are edited based on the video template to output a recommended video.

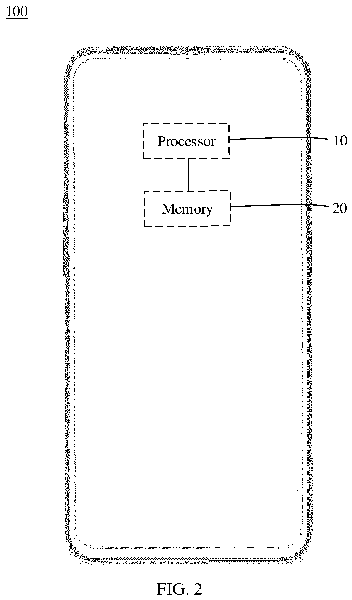

As shown in FIG. 2, a terminal 100 of the present embodiment includes a memory 20 and a processor 10. The terminal 100 may be configured to perform the video processing method of the present embodiment. That is, the terminal 100 is configured to perform the operations 01, 02 and 03 described in the above. In detail, the memory 20 stores a plurality of initial videos and the tag type preset for the video template. The processor 10 is configured to intercept at least one video clip from each of the plurality of initial videos, to associate a tag to each of the at least one video clip, and to stitch video clips associated to tags in the tag type based on the tag type preset in the video template to obtain a final video.

According to the video processing method and the terminal 100 of the present disclosure, tags are associated to the video clips. While stitching the video clips to obtain the output recommended video, the video clips, which are associated to the tags in the tag type, are selected based on the tag type preset for the video template and are stitched, such that a theme of the recommended video conforms to a theme of the video template, and the theme of the recommended video is clearer and more explicit.

In detail, the terminal 100 may be any terminal, such as a mobile phone, a computer, a camera, a tablet computer, a laptop computer, a head-mounted display device, a game console, a smart watch, a smart TV set, and so on. The specification of the present disclosure will be illustrated by taking the mobile phone as the terminal 100. It shall be understood that a specific form of the terminal 100 is not limited to the mobile phone.

The processor 10 performs the operation 01. That is, the processor 10 identifies the set of video clips in each initial video. The initial video may be any video file that is obtained from a video or a photo taken by the terminal 100, downloaded from a server, received by means of Bluetooth, and the like, and stored in the memory 20. The video data of each video clip is attached with a tag, such that the video clip is classified based on the tag.

In an example, the processor 10 acquires a video in a preset folder as the initial video. In this way, the processor 10 may acquire the initial video autonomously. The preset folder may be any part of a storage space in the memory 20 or all folders in the memory 20, such as a media library or other folders in the terminal 100. There may be one or more preset folders. The preset folder can be changed by the user. In addition, the user may set the processor 10 to acquire only a video stored in the folder within a certain period of time as the initial video. For example, the video stored in the folder in the last three days may be set as the initial video.

In another example, the processor 10 obtains a selected video as the initial video based on the user's input. In this way, the user may select the initial video based on the user's own preference to meet the user's individual needs. For example, the user may select a video of interest from a series of videos as the initial video. In detail, the user may click a thumbnail of a video to select one or more videos as the initial videos, such that the user may select a video that the user is more satisfied about photographing from a plurality of videos. Alternatively, a time interval may be set, a video that is taken within the time interval may be selected as the initial video, such that the user may quickly select a video taken during a certain trip as the initial video.

In another example, the processor 10 processes a selected image to obtain the initial video. It shall be understood that the user may be more interested in one or more particular images and desire to create a video for the one or more particular images. In the present example, the user may composite a video from one single image or a plurality of images and take the video as the initial video. In another embodiment, the processor 10 may compose a video from one or more of determined images and video clips, and take the composed video as the initial video. In this case, the user may select one image. While the processor is processing the image to obtain a video, the processor 10 may select various portions of the image as various frames of the video. For example, a top left corner of the image is selected as a first frame of the video. As the number of frames increases, a displaying view gradually moves to a top right corner of the image and subsequently to a bottom right corner of the image, and so on, such that the various portions of the image are played at various time points to form the video and serve as the initial video. Alternatively, the user may take various zoom levels to zoom a same image. The same image displayed in the various zoom levels may be taken as various frames of a video. For example, as the number of frames increases, a selected person in the image is gradually zoomed in and displayed, the image displayed in the various zoom levels are played at various time points to form the video and serve as the initial video. Alternatively, the user may apply various filters or rendering effects to a same image, and the image having different displaying effects are displayed at various time points to create a video and take the video as the initial video. Alternatively, the user may select a plurality of images and play the plurality of images in a chronological order to form a video and take the video as the initial video. Of course, examples of creating a video based on one image or a plurality of images and taking the created video as the initial video shall not be limited to the above examples, but may be achieved by other means, and will not be limited by the present disclosure.

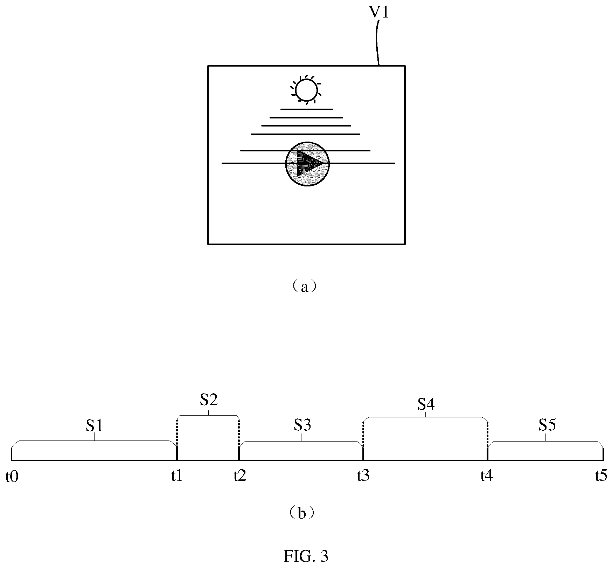

The processor 10 may simultaneously intercept at least one video clip from one or more initial videos, obtaining the set of video clips. One video clip may be intercepted from each initial video, and the intercepted video clip may be a part of the initial video or entirety of the initial video. A plurality of video clips may be intercepted from each initial video, the plurality of video clips may form entirety of the initial video, and some portions of the initial video may not be intercepted and may not be one of the plurality of video clips. The processor 10 may parse the initial video into M image frames. The processor 10 may determine video data, which satisfies a predetermined condition, from the parsed initial video and take the determined video data as the set of video clips. The M is a positive integer greater than 1. When the video clips include N image frames, and N is a positive integer greater than 1 and less than or equal to M, a process of the processor determining the tag may include following operations. An image type of each image frame may be determined. When a ratio of the number of image frames belonging to a same image type to the total number of image frames satisfies a condition, a tag associated to the image type may be matched. As shown in an example in FIG. 3, an initial video V1 (as shown in FIG. 3a) is taken as an example. A total duration of the initial video V1 is from a time point t0 to a time point t5 (as shown in FIG. 3b). After interception, video clips S1, S3 and S5 are obtained and meet requirements. The video clips S1, S3 and S5 are taken as exciting video clips. The video clip S1 is a part of the initial video V1 from the time point t0 to a time point t1. The video clip S3 is a part of the initial video V1 from a time point t2 to a time point t3. The video clip S5 is a part of the initial video V1 from a time point t4 to the time point t5. Portions S2 and S4 are not intercepted as video clips. The S2 is a part of the initial video V1 from the time point t1 to the time point t2, and the S4 is a part of the initial video V1 from the time point t3 to the time point t4. To be noted that, performing the operation 01 where at least one video clip is intercepted from the initial video does not impact the video file of the initial video, but only a start time point and an end time point of each of the at least one video clip are recorded, or the intercepted video clip is stored in the memory 20.

In the process of interception, the processor 10 may intercept the initial video to obtain the at least one video clip based on certain rules. In an example, the processor 10 may intercept a plurality of consecutive frames that include human faces from the initial video and take the plurality of consecutive frames as a video clip. The processor 10 may extract all frames from the initial video, identify all frames that include the human faces (hereinafter referred to as face frames) through a face recognition algorithm, and intercept the plurality of consecutive face frames as the video clip. The video clip may be made for recording a person in a scene, and may be a clip that the user wishes to keep for composing the final video.

In another example, the processor 10 may intercept a plurality of consecutive frames of a same scene in the initial video and take the intercepted plurality of consecutive frames as a video clip. The processor 10 may extract all frames from the initial video, and identify scenes of all frames through a scene recognition algorithm. When scenes of a plurality of consecutive frames are of a same scene, for example, the scenes of the plurality of consecutive frames are of a beach, a lawn, a hotel, a table, and the like, the plurality of consecutive frames are intercepted as the video clip. The video clip may be a continuous record of what is happening in the same scene and may be a clip that the user wishes to keep for composing the final video.

In another example, the processor 10 may determine at least two consecutive image frames from the M image frames, and the consecutive image frames are in a same image type. When the at least two consecutive image frames satisfy the predetermined condition, the at least two consecutive image frames are taken as the video clip. For example, the processor 10 may intercept a plurality of consecutive frames that are clearly imaged from the initial video and take the plurality of consecutive frames as a video clip. The processor 10 may extract all frames of the initial video and determine whether all frames are clearly imaged. In detail, the processor 10 may determine whether an image frame is out of focus, whether blur caused by moving is present, whether the image frame is overexposed, and the like. When none of these cases is present, the image frame is determined as being clearly imaged, the plurality of consecutive frames that are clearly imaged may be intercepted and taken as the video clip. The video clip may be a clip that the user is satisfied, and may be a clip that the user wishes to keep for composing the final video.

The limited examples mentioned above are only a few examples, and particular rules for intercepting video clips from the initial video are not limited to the above examples. For example, aesthetics may be incorporated for intercepting video clips, such as some aesthetics views provided by a nima system.

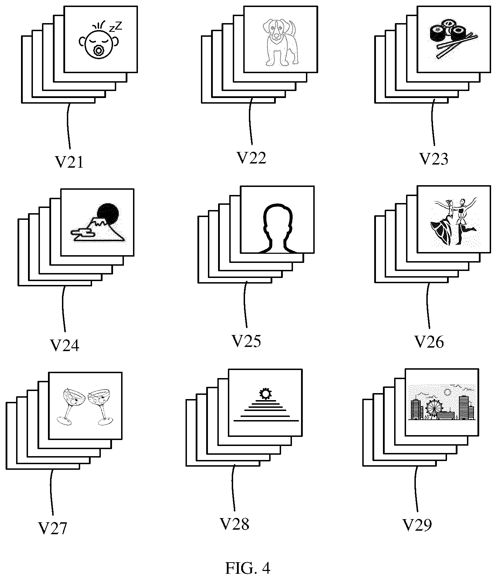

The processor 10 associates a tag to each of the at least one video clip. The at least one video clip may show different scenes, objects, angles, and the like. Associating the tag to each video clip may facilitate subsequent operations to be performed, such as locating a video clip based on the tag, sorting more than one of the at least one video clip, and processing the more than one of the at least one video clip as a batch. To be noted that, associating the tag to each of the at least one video clip does not affect the video clip itself, but merely provides an identifier for the video clip. Associating the tag to the video clip based on content of the video clip may be achieved in various ways, which may be set for the terminal 100 while manufacturing, or obtained by the user through downloading, or set by the user. Some possible ways of associating the tag to the video clip will be exemplarily illustrated below by referring to FIG. 4.

The video clip may be associated to an object tag. In the video clip associated to the object tag, a ratio of the number of frames of a scene that includes the object to the total number of frames is greater than a predetermined ratio. The object may be items in a same type, such as persons, dogs, cats, children, or one same child, and the like. The video clip includes a plurality of frames, the total number of frames is the total number of frames of the video clip. The processor 10 may identify the plurality of frames by performing an image recognition algorithm to determine whether the object is included in each of the plurality of frames. When the processor determines that one of the plurality of frames includes the object, one frame is added, and so on. In this way, the number of frames that include the object in all of the plurality of frames of the video clip may be calculated. At last, a ratio of the number of frames that include the object to the total number of frames is calculated. In response to the ratio being greater than or equal to the predetermined ratio, it is determined that the theme of the video clip may be for the purpose of photographing the object, the user may wish to record the object by the video clip, and the object tag is associated to the video clip.

In detail, the object may be a child, and the video clip may be associated to a child tag. In the video clip associated to the child tag (such as the video clip V21 in FIG. 4), a ratio of the number of frames of a scene that includes the child to the total number of frames is a greater than a first ratio. In detail, the video clip includes a plurality of frames, and the total number of frames may be the total number of frames of the video clip. The processor 10 may identify the plurality of frames by performing the image recognition algorithm to determine whether the child is included in each of the plurality of frames. For example, the processor 10 may identify a head-to-body ratio and roundness of facial features of each person in each frame to determine whether the child is included in each of the plurality of frames. In response to a frame being identified and determined as including the child, one frame is added, and so on, such that the number of frames in all of the plurality of frames of the video clip that include the child may be calculated. At last, the ratio of the number of frames including the child to the total number of frames is calculated. In this case, the predetermined ratio may be the first ratio. In response to the ratio being greater than or equal to the first ratio, it is determined that the theme of the video clip may be for photographing the child, and the user may wish to record the child's daily activities by the video clip. Therefore, the video clip is associated to the child tag. In response to the ratio being less than the first ratio, the child may not be the theme of the video clip, and the video clip is not associated to the child tag. The first ratio may be, such as one half, two thirds, three quarters, and the like, which will not be limited herein. One or more video clips associated to the child tag may be intercepted from one same initial video, a plurality of video clips associated to the child tag may be sorted and displayed on the terminal 100, and the user may view the video clips associated to the child tag individually.

The object may be a pet, and the video clip may be associated to a pet tag. In the video clip associated to the pet tag (such as a video clip V22 in FIG. 4), a ratio of the number of frames of a scene that includes the pet to the total number of frames is a greater than a second ratio. In detail, the video clip includes a plurality of frames, and the total number of frames may be the total number of frames of the video clip. The processor 10 may identify the plurality of frames by performing the image recognition algorithm to determine whether the pet is included in each of the plurality of frames, and the pet may be a cat, a dog, a pig, a snake, a bird, and the like. In response to a frame being identified and determined as including the pet, one frame is added, and so on, such that the number of frames in all of the plurality of frames of the video clip that include the pet may be calculated. At last, the ratio of the number of frames including the pet to the total number of frames is calculated. In this case, the predetermined ratio may be the second ratio. In response to the ratio being greater than or equal to the second ratio, it is determined that the theme of the video clip may be for photographing the pet, and the user may wish to record some interesting activities of the pet by the video clip. Therefore, the video clip is associated to the pet tag. In response to the ratio being less than the second ratio, the pet may not be the theme of the video clip, and the video clip is not associated to the pet tag. The second ratio may be, such as one half, two thirds, three quarters, and the like, which will not be limited herein. One or more video clips associated to the pet tag may be intercepted from one same initial video, a plurality of video clips associated to the pet tag may be sorted and displayed on the terminal 100, and the user may view the video clips associated to the pet tag individually.

A video clip may be associated to a selfie tag. In the video clip associated to the selfie tag (such as a video clip V25 in FIG. 4), a ratio of the number of frames that includes faces to the total number of frames is a greater than a fourth ratio, wherein the frames that includes faces refer to frames that has a face area greater than a third ratio. In detail, the video clip includes a plurality of frames, and the total number of frames may be the total number of frames of the video clip. The processor 10 may identify the plurality of frames by performing the image recognition algorithm to determine whether the face area in each of the plurality of frames is greater than or equal to the third ratio. In response to a frame being identified and determined as having the face area greater than or equal to the third ratio, one frame is added (referred to as a selfie frame), and so on, such that the number of selfie frames in all of the plurality of frames of the video clip may be calculated. At last, the ratio of the number of selfie frames to the total number of frames is calculated. In response to the ratio being greater than or equal to the fourth ratio, it is determined that the theme of the video clip may be for selfie photographing, and the user may wish to record description for himself/herself. Therefore, the video clip is associated to the selfie tag. Each of the third ratio and the fourth ratio may be, such as one half, three fifths, three quarters, and the like, which will not be limited herein. One or more video clips associated to the selfie tag may be intercepted from one same initial video. A plurality of video clips associated to the selfie tag may be sorted and displayed on the terminal 100, and the user may view the video clips associated to the selfie tag individually.

A video clip may be associated to a preset scene tag. In the video clip associated to the preset scene tag, the scene in each frame of the video clip is a preset scene. The preset scene may include any scene, such as a scene of a night, a scene of a forest, a scene of a beach, a scene of a playground, a scene of a lawn, and the like. The processor 10 may identify the scene of each frame of the video clip by performing the image recognition algorithm, and determine whether the scene in each frame is a certain preset scene. In response to the scene in each frame being the certain preset scene, the video clip is associated to the preset scene.

In detail, the video clip may be associated to a beach tag, a cityscape tag, a gathering tag, a toast tag, a party dance tag, and the like. The video clip showing a beach scene (such as a video clip V28 in FIG. 4) is associated to the beach tag, for example, each frame of the video clip shows the beach scene. The video clip showing a cityscape scene (such as a video clip V29 in FIG. 4) is associated to the cityscape tag, for example, each frame of the video clip shows the cityscape scene. The video clip showing a gathering scene (such as a video clip V23 in FIG. 4) is associated to the gathering tag, for example, each frame of the video clip shows the gathering scene. The video clip showing a toast scene (such as a video clip V27 in FIG. 4) is associated to the toast tag, for example, each frame of the video clip shows the toast scene. The video clip showing a party dance scene (such as a video clip V26 in FIG. 4) is associated to the party dance tag, for example, each frame of the video clip shows the party dance scene. A plurality of video clips associated to the beach tag, the cityscape tag, the gathering tag, the toast tag, the party dance tag, and the like, may be sorted and displayed on the terminal 100, and the user may view the video clips associated to any of the tags individually.

The tag type may not be limited to the above description, but may further include other types. For example, the tag type may further include a night tag, and each frame of the video clip associated to the night tag shows a lower overall brightness. The tag type may further include a travel tag, and a video clip associated to the travel tag (such as a video clip V24 in FIG. 4) includes a plurality of frames showing tourist spots. The tag type may further include a motion tag, and a character in a video clip associated to the motion tag may be moving.

A plurality of video clips intercepted from the same initial video may be associated to a same tag or tags in various types. For example, for one of the video clips intercepted from the same initial video, the user may focus on a child playing around, and the video clip may be associated to the child tag. For another one of the video clips intercepted from the same initial video, the user may focus on a pet playing with the child, and the video clip may be associated to the pet tag.

The processor 10 performs the operation 02, that is, a plurality of video clips are extracted from the set of video templates of the plurality of initial videos based on the tag type of the video template. The tag of the plurality of video clips matches the tag type of the video template, and the plurality of video clips are intercepted from the same initial video or different initial videos. In detail, the processor 10 may identify the tag type of the video template, place the video clips in an order based on similarity between the tag of each video template and the tag type, and tag a plurality of video clips whose similarity is in a confidence range interval. The processor may tag various video clips of various initial videos. A preset tag type of the video template may be stored in the memory 20. Each video template may be preset with various tag types, such that the video clip may be selected based on various video templates and stitched to obtain various final videos. In this way, the various final videos may be thematically distinct from each other, and at the same time, various video clips of the same final video may be thematically uniform.

Tagging at least one video clip from the set of video clips may refer to tagging a plurality of consecutive frames including a human face from the set of video clips as the at least one video clip; and/or tagging a plurality of consecutive frames that are clearly imaged from the set of video clips as the at least one video clip; and/or tagging a plurality of consecutive frames showing a same scene from the set of video clips as the at least one video clip.

The processor 10 performs the operation 03, that is, the extracted plurality of video clips are edited by using the video template to output a recommended video. The video template includes an object video template. A tag type of the object video template includes the object tag. A video for the object may be generated based on the object video template to obtain a recommended video having a distinct theme. Based on content of the video template, the plurality of video clips of the plurality of video clips may be edited. For example, an order of playing the video clips, repetition of the video clips, and the like, may be edited. Based on the video template, various video clips may be selected for editing.

While the processor 10 is performing the operation 03, the processor determines a start time point and an end time point of each video clip based on duration of the video template, fuses a plurality of video clips in the video template based on the start time point and the end time point of each video clip and the order in which the at least one video clip is played, and outputs the recommended video.

When it is detected that the user desires to edit the recommended video, since various video templates correspond to various durations and styles, the processor 10 determines a video template corresponding to an editing instruction as a second video template. The processor 10 adjusts the start time point and end time point of each video clip based on a duration of the second video template and takes the adjusted video clip as at least one second video clip. The processor 10 fuses the plurality of second video clips in the second video template based on the start time point and the end time point of each of the at least one second video clip and an order in which each of the plurality of second video clips is played, generating a second recommended video.

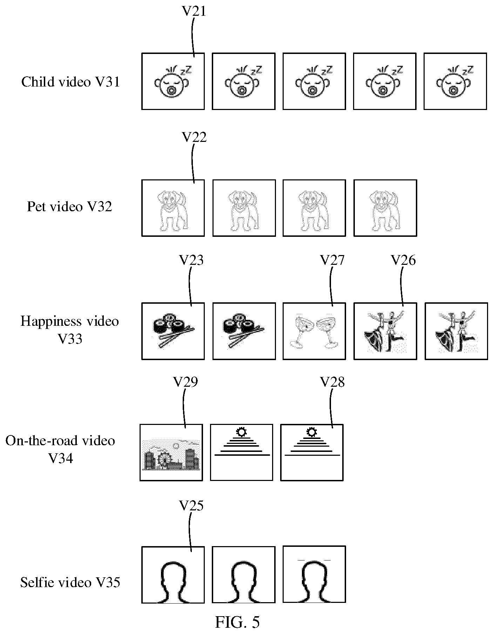

In the example shown in FIG. 5, the video template includes a child video template. A tag type of the child video template includes the child tag. A recommended video obtained by stitching video clips based on the child video template may be called a child video V31. The child video V31 is obtained by stitching together all video clips V21 that are attached to the child tag, such that the theme of the child video V31 is clear. The theme is substantially about the child and is for the user to record the child's growing. The plurality of video clips V21 may be stitched together in a chronological order of filming.

The video template includes a pet video template, and a tag type of the pet video template includes the pet tag. A recommended video obtained by stitching video clips based on the pet video template may be called a pet video V32. The pet video V32 is obtained by stitching together all video clips V22 that are attached to the pet tag, such that the theme of the pet video V32 is clear. The theme is substantially about the pet and is for the user to record the pet. The plurality of video clips V22 may be stitched together in a chronological order of filming.

The video template includes a schedule video template, and a tag type of the schedule video template includes at least one preset scene tag. A video for a certain schedule or a certain event may be generated based on the schedule video template, such that a recommended video for recording the schedule or the event may be generated.

For example, the schedule video template includes a happiness video template. A tag type of the happiness video template includes a dinner tag, a toast tag and a party dance tag. A recommended video obtained by stitching video clips based on the happiness video template may be called a happiness video V33. The happiness video V33 is obtained by stitching all video clips V23 tagged with the dinner tag, all video clips V27 tagged with the toast tag and all video clips V26 tagged with the party dance tag. In detail, the video clips V23, the video clips V27 and the video clips V26 are stitched together in a chronological order of filming, such that the theme of the happiness video V33 is clear. The happiness video V33 is substantially about partying, having fun, and the like and is for the user to keep a special record of the party.

For example, the schedule video template includes an on-the-road video template. A tag type of the on-the-road video template includes the beach tag and the cityscape tag. A recommended video obtained by stitching video clips based on the on-the-road video template may be called an on-the-road video V34. The on-the-road video V34 is obtained by stitching all video clips V28 tagged with the beach tag and all video clips V29 tagged with the cityscape tag. In detail, the video clips V28 and the video clips V29 are stitched together in a chronological order of filming, such that a theme of on-the-road video V34 is clear. The on-the-road video V34 is substantially about travelling and is for the user to record the trip.

The video template includes a selfie video template. A tag type of the selfie video template includes the selfie tag. A recommended video obtained by stitching video clips based on the selfie video template may be called a selfie video V35. The selfie video V35 is obtained by stitching all video clips V25 tagged as the selfie tag, such that a theme of the selfie video V35 is clear. The selfie video V35 is substantially about self-photographing and allows the user to view all selfie videos at once. A plurality of video clips V25 may be stitched together in a chronological order of filming.

Specific types of the video templates may not be limited to the above decryption and may include other types. For example, the video templates may include a night video template. A predetermined tag type of the night video template includes the night tag. All video clips associated to the night tag are stitched together based on the night video template to obtain a night video, enabling the user to specifically record night experiences. For example, the video template may further include a rhythm video template. A predetermined tag type of the rhythm video template includes the motion tag. All video clips associated to the motion tag are stitched together based on the rhythm video template to obtain a rhythm video, such that the user may specifically record exciting actions.

To be noted that, the video clips in the same recommended video in FIG. 5 may be seamlessly stitched together. Alternatively, a first video clip and a second video clip may be adjacent, and a filming time of the second video clip may be shown between the first video clip and the second video clip. Alternatively, the user may select and display an image frame between the first video clip and the second video clip. The present disclosure does not limit a stitching manner of the video clips.

After the processor 10 obtains a plurality of recommended videos based on the plurality of video templates, the terminal 100 may display the plurality of recommended videos in various types. For example, the recommended video may be popped up to the user in a recommendation manner, and the user may select the recommended video and play the selected recommended video based on his or her interests.

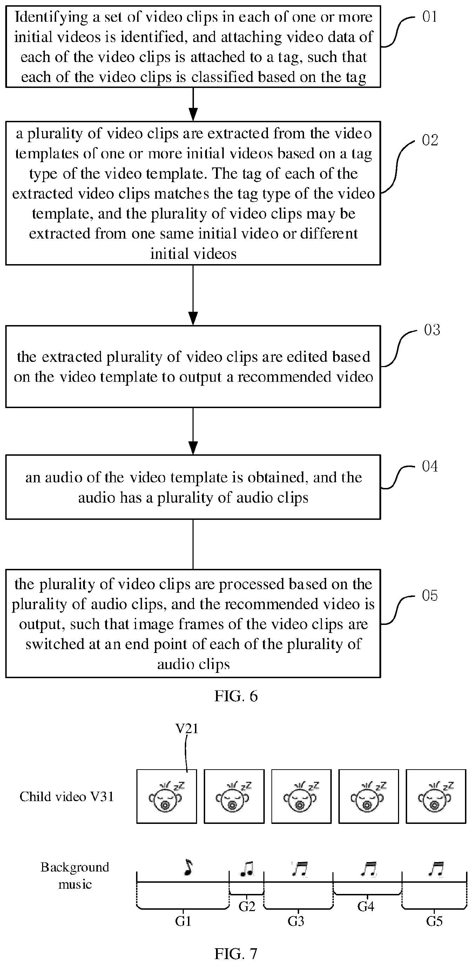

As shown in FIG. 6, in some embodiments, the video template is preset with background music. The video processing method further includes an operation 04 and an operation 05, where the background music is added to the recommended video. That is, in the operation 04, an audio of the video template is obtained, and the audio has a plurality of audio clips. In the operation 05, the plurality of video clips are processed based on the plurality of audio clips, and the recommended video is output, such that image frames of the video clips are switched at an end point of each of the plurality of audio clips. As shown in FIG. 2, the processor 10 may further be configured to perform the operations 04 and 05. That is, the processor 10 may be configured to add the background music to the recommended video.

In detail, different video templates may be preset with different background music. For example, lullabies, children's songs and the like may be preset as the background music for child video templates. Rock songs and the like may be preset as the background music for sports video templates. Jazz songs and the like may be preset as the background music for the on-the-road video templates. The present disclosure does not limit the background music for various video templates. When the user is watching the recommended video, the music background fits well with the theme of the recommended video, and a last image frame of the video clip is switched at an end of a certain music clip, such that a shocking effect is achieved. Of course, the preset background music of the video template may be set and modified by the user.

Taking the child video V31 in FIG. 7 as an example, throughout a timeline of the child video V31, the background music includes a song G1, a song G2, a song G3, a song G4 and a song G5 respectively. A playing duration of each of the song G1, the song G2, the song G3, the song G4 and the song G5 may be determined based on a duration of each of the plurality of video clips V21. For example, the duration of the song G1 may be the same as the duration of a first video clip V21, the duration of the song G2 may be the same as the duration of a second video clip V21, ......, the duration of the song G5 may be the same as the duration of a second video clip V25.

In addition, various video templates may be preset with various video effects. For example, the rhythm video template may be preset with a slow-play video effect, such that the video clip is played in a reduced speed, allowing the user to view details of an action in the rhythm video. In another example, the selfie video template may be preset with a face enhancement effect, allowing the user to view the selfie video having a better processing effect of the face.

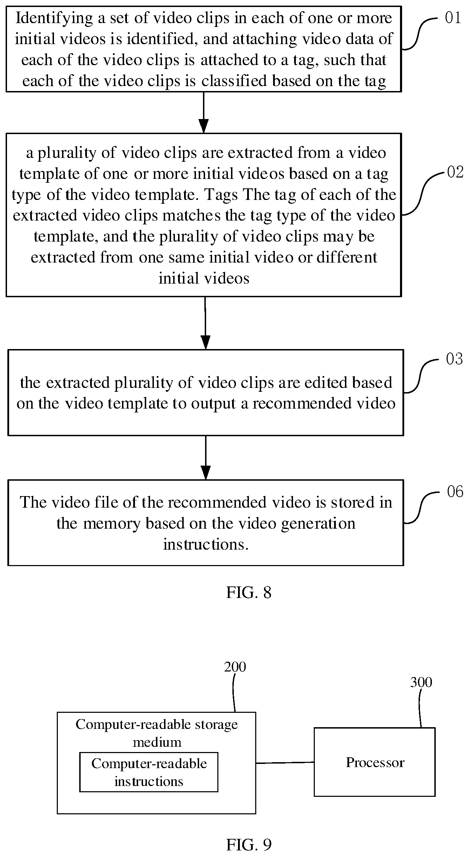

As shown in FIG. 8, in some embodiments, the video processing method further includes an operation 06. In the operation 06, a video file of the recommended video is generated based on a predetermined operation. That is, the video file of the recommended video is stored into the memory based on a video generation instruction. As shown in FIG. 2, the processor 10 may be configured to perform the operation 06. That is, the processor 10 may be configured to generate the video file of the recommended video based on the predetermined operation.

In detail, when recommending the recommended video to the user, the terminal 100 does not store the video file of the recommended video, but only records the start time point, the end time point, and a storage location of the video clips of the recommended video. When the user views the recommended video, the video clips are read out from the storage location to save a storage space of the terminal 100. When the user performs a preset operation on one or some of the recommended videos, the processor 10 generates a video file for each of the one or some of the recommended videos. The generated video file may be stored in the memory 20 allowing the user to view, to share and to edit the video file at a later stage.

In detail, the preset operation may be the user clicking a predetermined virtual operation button displayed on the terminal 100 after viewing the recommended video. Alternatively, the user viewing the recommended video for a plurality of times may be taken as the user performing the preset operation on the recommended video.

In the present disclosure, the video processing method may further include an operation 07, an operation 08 and an operation 08, and the video processing method may also be applied to the terminal. In the operation 07, each initial video is divided into the set of video clips. In the operation 08, the plurality of video clips are determined from the set of video clips based on the content of the video template. The plurality of video clips are extracted from the same initial video or different initial videos. In the operation 09, a time duration of each of the plurality of video clips and an order of playing the plurality of video clips are edited, and the plurality of video clips are fused in the video template to output the recommended video.

The processor 10 may further be configured to clear the recommended video in response to an original video corresponding to the recommended video not meeting a predetermined condition. In an embodiment, in response to the original video being deleted, the corresponding recommended video may be deleted, or a video clip in the recommended video may be deleted. In another embodiment, the recommended video may be deleted in response to a time length between a time point when the original video is filmed and a current time point exceeding a predetermined time length. For example, a recommended video that was generated 90 days ago may be automatically deleted.

When an updated video template is detected, a recommendation video before the video template is updated may be taken as an original recommendation video. The processor 10 may further be configured to fuse at least one video clip matching the updated video template in the updated video template to obtain the updated recommendation video, and/or configured to replace the original recommendation video with the updated recommendation video.

As shown in FIG. 9, the present disclosure also provides a non-volatile computer-readable storage medium 200 including computer-readable instructions. The computer-readable instructions, when being executed by the processor 300, cause the processor 300 to perform the video processing method of any one of the above embodiments.

As shown in FIG. 1 and FIG. 9, exemplarily, the computer readable instructions, when being executed by the processor 300, cause the processor 300 to perform the operation 01. In the operation 01, the processor 300 identifies a set of video clips of each initial video. The video data of each video clip has a tag. The processor 300 classifies the video clips based on the tag. In the operation 02, the processor 300 extracts a plurality of video clips from the set of video templates of each of one or more initial videos based on the tag types of the video templates. The tags of the video clips match the tag types of the video templates. The plurality of video clips are extracted from the same initial video or different initial videos. In the operation 03, the processor 300 edits the extracted plurality of video clips by using the video template to output the recommendation video.

As shown in FIG. 6 and FIG. 9, exemplarily, the computer-readable instructions, when being executed by processor 300, cause the processor 300 to perform the operations 04 and 05 to add the background music to the recommended video. That is, in the operation 04, the processor 300 obtains the audio for the video template, and the audio has a plurality of audio clips. In the operation 05, the processor 300 processes the plurality of video clips based on the audio clips and output the recommended video, such that image frames of the video clips are switched at the end point of each of the audio clips.

As shown in FIG. 8 and FIG. 9, exemplarily, the computer-readable instructions, when being executed by the processor 300, cause the processor 300 to perform the operation 06: generating the video file of the recommended video based on the preset operation.

In the present disclosure, reference terms "an embodiment", "some embodiments", "schematic embodiments", "examples", "specific examples" or "some examples" mean that specific features, structures, materials or properties described in connection with the embodiments or examples are included in at least one embodiment or example of the present disclosure. In the present disclosure, the exemplary expressions of the above terms do not necessarily refer to one same embodiment or example. Furthermore, the specific features, structures, materials or properties may be combined in a suitable manner in any one or more of the embodiments or examples. In addition, without contradicting each other, any ordinary skilled person in the art may combine various embodiments or examples and the features of the various embodiments or examples described in the present specification.

Any process or method described in the flowchart or otherwise described herein may be interpreted as representing a module, a segment or a portion of codes including one or more executable instructions for implementing operations of a particular logical function or process. The scope of the preferred embodiment of the present disclosure includes additional implementations in which the functions may be performed in a substantially simultaneous manner according to the functions involved, in an order not shown or discussed or in a reverse order, and shall be understood by the ordinary skilled person in the art.

Although embodiments of the present disclosure have been shown and described above. It shall be understood that the above embodiments are exemplary and shall not limit the scope of the present disclosure. Ordinary skilled persons in the art may make variations, modifications, replacements and variants of the above embodiments within the scope of the present disclosure.

## Claims

1. A video processing method, for a terminal, wherein the mobile terminal stores a plurality of initial videos, and the method comprises:
identifying a set of video clips in each of the plurality of initial videos, wherein video data of each of the set of video clips is attached to a tag, and the set of video clips are capable of being classified based on the tag;
extracting a plurality of video clips from a set of video templates of one or more of the initial videos based on a tag type of a video template, wherein the tag of each of the extracted plurality of video clips matches the tag type of the video template, and the plurality of video clips are extracted from a same initial video or different initial videos; and
editing the extracted plurality of video clips by using the video template to output a recommended video.

2. The video processing method according to claim 1, wherein the identifying a set of video clips in each of the plurality of initial videos, comprises:
parsing each of the plurality of initial videos into M image frames, wherein the M is a positive integer greater than 1; and
determining video data satisfying a predetermined condition from the parsed initial videos, and taking the determined video data as the set of video clips.

3. The video processing method according to claim 2, wherein the video clips comprise N image frames, the N is a positive integer greater than 1 and less than or equal to M, and the determining a tag matching each of the set of video clips, comprises:
determining an image type of each of the image frames; and
in response to a ratio of the number of image frames belonging to a same image type to the total number of image frames meeting a condition, matching a tag associated to the image type.

4. The video processing method according to claim 2, wherein the determining video data satisfying a predetermined condition from the parsed initial videos, and taking the determined video data as the set of video clips, comprises:
determining at least two consecutive image frames from the M image frames, wherein the consecutive image frames are in a same image type; and
in response to the at least two consecutive image frames satisfying a predetermined condition, taking the at least two consecutive image frames as one of the set of video clips.

5. The video processing method according to claim 1, wherein the extracting a plurality of video clips from a set of video templates of one or more of the initial videos, comprises:
identifying the tag type of the video template; and
placing the plurality of video clips in an order based on similarity between the tag of each of the plurality of video clips and the tag type of the video template, and extracting the plurality of video clips whose similarity is within a confidence range interval.

6. The video processing method according to claim 5, wherein the video data of each of the set of video clips being attached to the tag, comprises:
tagging a plurality of consecutive frames that comprise human faces in the set of video clips as a video clip; and/or
tagging a plurality of consecutive frames that are clearly imaged in the set of video clips as a video clip; and/or
tagging a plurality of consecutive frames that display a same scene in the set of video clips as a video clip.

7. The video processing method according to claim 1, wherein the editing the extracted plurality of video clips to output a recommended video, comprises:
determining a start time point and an end time point of each of the extracted plurality of video clips based on a duration of the video template; and
fusing the plurality of video clips in the video template based on the start time point and the end time point of each of the extracted plurality of video clips and an order that the extracted plurality of video clips are played; and outputting the recommended video.

8. The video processing method according to claim 7, wherein in response to an editing instruction for the recommended video being detected, the method further comprises:
determining a video template of the editing instruction as a second video template;
adjusting the start time point and the end time point of each of the extracted plurality of video clips based on a duration of the second video template, taking the adjusted video clips as at least one second video clip; and
fusing the plurality of video clips in the second video template based on the start time point and the end time point of each of the at least one second video clip and the order that the extracted plurality of video clips are played, and generating a second recommended video.

9. The video processing method according to claim 7, further comprising:
acquiring an audio of the video template, wherein the audio has a plurality of audio clips;
processing the order that the plurality of video clips are played based on the plurality of audio clips, and outputting the recommended video; and
enabling the image frames of the plurality of video clips to be switched at an end point of each of the plurality of audio clips.

10. The video processing method according to claim 7, wherein after the outputting the recommended video, the method further comprises:
in response to an original video corresponding to the recommended video not meeting a predetermined condition, deleting all recommended videos.

11. The video processing method according to claim 7, wherein when an updated video template is detected, the recommended video before the video template being updated is taken as an original recommended video, and after outputting the recommended video, the method further comprises:
fusing a plurality of video clips matching the updated video template in the updated video template to obtain an updated recommended video; and/or
replacing the original recommended video with the updated recommended video.

12. The video processing method according to claim 1, wherein in response to a video generation instruction for the recommended video being detected, the method further comprises:
storing a video file of the recommended video to a memory based on the video generation instruction.

13. The video processing method according to claim 1, wherein each of the plurality of initial videos is obtained by at least one of:
obtaining a selected video as one of the plurality of initial videos based on user input;
obtaining a video in a predetermined folder as one of the plurality of initial videos; and
processing a selected image to obtain one of the plurality of initial videos.

14. A video processing method, for a terminal, wherein the mobile terminal stores a plurality of initial videos, and the method comprises:
dividing each of the plurality of initial videos into a set of video clips;
determining a plurality of video clips from the set of video clips based on content of a video template, wherein the plurality of video clips are extracted from a same initial video or different initial videos; and
editing a playing duration and an order of playing the determined plurality of video clips, and fusing the plurality of video clips in the video template to output a recommended video.

15. The video processing method according to claim 14, wherein the set of video clips include at least two consecutive image frames, and the determining a plurality of video clips from the set of video clips, comprises:
identifying the number of sub-video templates in the video template, and a duration of each of the sub-video templates; and
determining the plurality of video clips from the set of video clips, wherein the number of the plurality of video clips stitched to form the recommended video is the same as the number of the sub-video templates.

16. The video processing method according to claim 14, wherein the fusing the plurality of video clips in the video template to output a recommended video, comprises:
determining a start time point and an end time point of each of the plurality of video clips based on a duration of the video template; and
fusing at least one of the plurality of video clips in the video template based on the start time point and the end time point of each of the plurality of video clips and the order of playing the plurality of video clips, and outputting the recommended video.

17. The video processing method according to claim 16, wherein in response to an editing instruction for the recommended video being detected, the method further comprises:
determining a video template for the editing instruction as a second video template;
adjusting the start time point and the end time point of each of the plurality of video clips based on a duration of the second video template, taking the adjusted plurality of video clips as a plurality of second video clips; and
fusing the plurality of second video clips in the second video template based on the start time point and the end time point of each of the plurality of second video clips and an order of playing the plurality of second video clips, and generating a second recommended video.

18. The video processing method according to claim 14, further comprising:
acquiring an audio of the video template, wherein the audio has a plurality of audio clips; and
processing the plurality of video clips based on the plurality of audio clips and outputting the recommended video, enabling image frames of the plurality of video clips to be switched at an end point of each of the plurality of audio clips.

19. The video processing method according to claim 14, wherein the plurality of initial videos are obtained by at least one of:
obtaining a selected video as one of the plurality of initial videos based on user input;
obtaining a video in a predetermined folder as one of the plurality of initial videos; and
processing a selected image to obtain one of the plurality of initial videos.

20. A video processing apparatus, for a terminal, wherein the mobile terminal stores a plurality of initial videos, and the apparatus comprises:
a video tagging module, configured to identify a set of video clips in each of the plurality of initial videos, wherein a video data of each of the set of video clips has a tag, and the set of video clips are capable of being classified based on the tag;
a video extracting module, configured to extract a plurality of video clips from a set of video templates of one or more of the plurality of initial videos based on tag types of the video templates, wherein tags of the extracted plurality of video clips match the tag types of the video templates where the plurality of video clips are extracted, and the plurality of video clips are extracted from a same initial video or different initial videos; and
a video recommendation module, configured to edit the extracted plurality of video clips based on the video templates to output a recommended video.

21. A terminal, comprising a processor and a memory, wherein the memory stores a plurality of initial videos, a tag type preset for a video template and a tag library for configuring a tag for a video clip, and the processor is configured to perform the video processing method as claimed in any one of claims 1-19 to output the recommended video.

22. A non-volatile computer-readable storage medium, comprising computer-readable instructions, wherein the computer-readable instructions, when being executed by a processor, cause the processor to perform the video processing method of any one of claims 1 to 19.
